# EUROPEAN PATENT APPLICATION

(11) **EP 3 477 668 A1**
(43) Date of publication of application: **01.05.2019**
(21) Application number: 17815272.4
(22) Date of filing: 15.06.2017
(51) Int. Cl.: H01F 37/00, H01F 27/22, H02M 3/155

(54) **INDUCTOR AND MOUNTING STRUCTURE OF SAID INDUCTOR**

(30) Priority: 22.06.2016 JP 2016123513
(71) Applicant: FDK Corporation, Tokyo 108-8212 (JP)
(72) Inventor: TAKIGUCHI, Takashi, Tokyo 108-8212 (JP); SHIMIZU, Takahiro, Tokyo 108-8212 (JP)
(74) Representative: Mewburn Ellis LLP
(86) International application number: PCT/JP2017/022086
(87) International publication number: WO 2017/221804

(57) **Abstract**

An inductor includes: a U-shaped core 10 in which legs 10b are integrally formed on two ends of a flat plate portion 10a including an outer surface that is a surface to be placed on a heat sink; an I-shaped core 11 bridging the legs of the U-shaped core 10; a coil 12 wound around an outer periphery of the I-shaped core 11; and an adhesive or a heat-release sheet 16 having thermal conductivity of 0.4 W/m-K or above that is interposed between the coil 12 and an inner peripheral surface of the U-shaped core 10.

## Description

### [Technical Field]

The present invention relates to an inductor and a structure for mounting the inductor on a heat sink, the inductor being suitable for use in a high-power-supply device and the like of various kinds of electronic and electric equipment.

### [Background Art]

As is well known, an inductor used in a high-power-supply device and the like inevitably has temperature increase due to heat generation of the coil according to Joule heat along with a great amount of current flowing through the coil. In a case where high-frequency current flows, eddy currents are induced in a conductor by magnetic flux made by the coil, and greater heat is generated in the coil and the temperature is accordingly increased. In a usage such as a resonance coil where high-frequency alternating current flows, since the magnetic flux in a core is also alternating, heat due to the iron loss is generated and the temperature of the core is accordingly increased.

Such temperature increase of the inductor may possibly cause damage and deterioration of the inductor; thus, measures to inhibit the temperature increase of the coil need to be taken.

The following ways are generally employed in order to inhibit the temperature increase due to the abovementioned heat generation. Specifically, the sectional area of the electric wire is increased to reduce electric resistance. Alternatively, a litz wire in which multiple thin covered copper wires are twisted is used to reduce the eddy currents and to accordingly reduce the copper loss. In addition, the sectional area of the core is increased to reduce density of the magnetic flux in the core and to accordingly reduce the iron loss.

On the other hand, there has been recently strong demand for size reduction of the inductor to reduce the size and weight of the power supply device. However, in the case where the electric wire is made thinner and the sectional area of the magnetic path of the core is made smaller for size reduction, the amount of the heat generated from the product is increased as mentioned above and also the temperature of the product is accordingly increased. This makes it difficult to achieve size reduction.

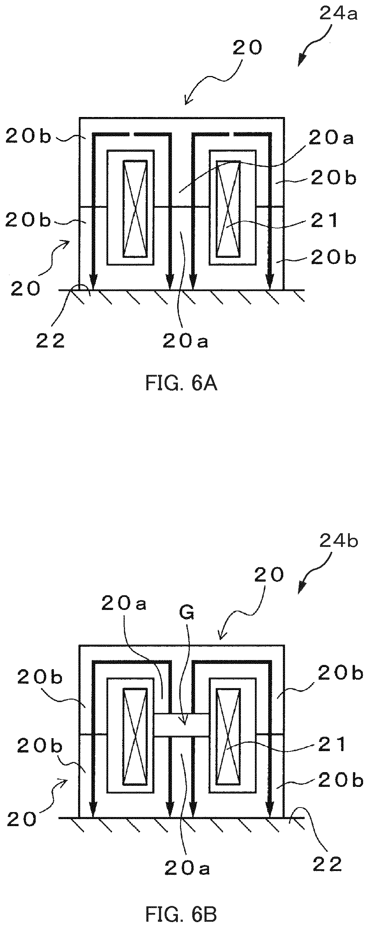

For example, as illustrated in Fig. 6A, there have been proposed an inductor 24a and a mounting structure thereof. In the inductor 24a, a closed magnetic path is formed by a pair of E-shaped cores 20 arranged to face each other, and a coil 21 wound around outer peripheries of middle legs 20a that have their tip end surfaces abutted on each other while outer legs 20b are abutted on each other.

However, in the mounting structure of the abovementioned inductor 24a, the entirety of the inductor 24 is cooled by causing the heat to flow from a top portion of the upper E-shaped core 20 to a heat sink 22 on which the lower E-shaped core 20 is placed and cools down as indicated by arrows in Fig. 6A. This heat path is quite long and causes great thermal resistance.

In a case where a gap G is provided by cutting off portions of the middle legs 20a of the E-shaped cores 20 like an inductor 24b illustrated in Fig. 6B, since the gap G is formed as an air layer having extremely low thermal conductivity, the heat generated in the middle leg 20a of the upper E-shaped core 20 is discharged from the top portion of the E-shaped cores 20 to the heat sink 22 through the outer legs 20b. This causes greater thermal resistance than that in the absence of the gap G, and the temperature of the E-shaped cores 20 is accordingly increased.

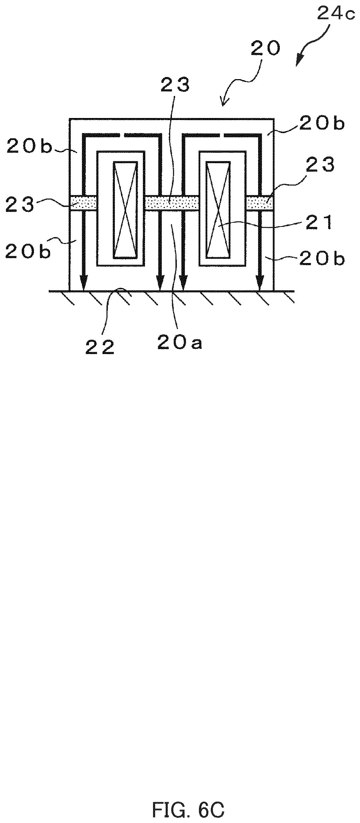

Also in a case where gap sheets 23 made of resin are interposed between the middle legs 20a and between the outer legs 20b like an inductor 24c illustrated in Fig. 6C, the thermal resistance is also great and the temperature of the E-shaped cores 20 is accordingly increased. For this reason, the sectional area of each E-shaped core 20 needs to be made larger, and thus it is difficult to achieve the abovementioned size reduction of the product.

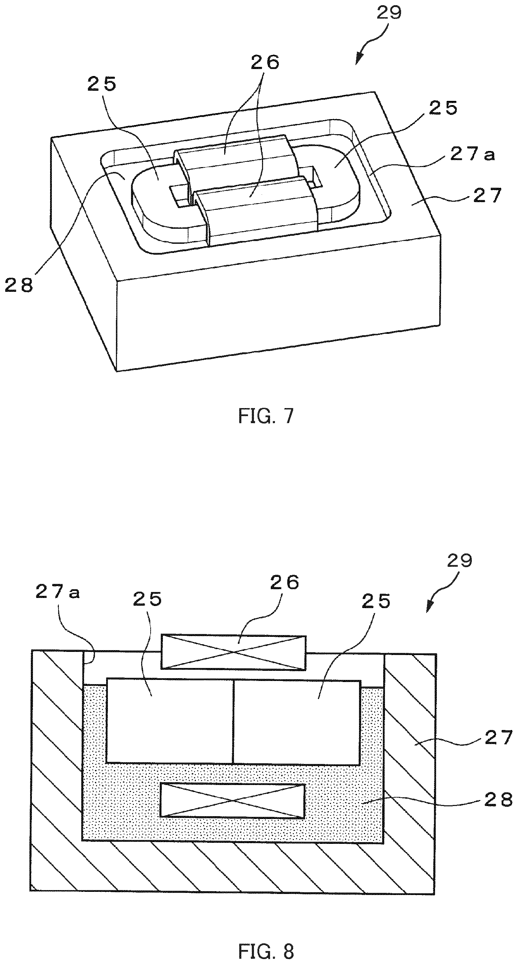

For example, like an inductor 29 illustrated in Figs. 7 and 8, the inductor 29 and a mounting structure of the inductor 29 have been known in which two U-shaped cores 25 and coils 26 are stored in a hole 27a provided in a heat sink 27 and thereafter the hole 27a is filled with potting material 28 having high thermal conductivity, so that the temperature of the inductor 29 can be decreased even with the same amount of heat generation.

However, in the mounting structure of the abovementioned inductor 29, a large amount of the expensive potting material 28 needs to be used. This causes high mounting cost. In addition, although this mounting structure is a structure in which the two U-shaped cores 25 are fixed to each other with an adhesive or the like, the two U-shaped cores 25 are likely to be separated by vibration or shock because the weight of the U-shaped cores 25 for a large product such as a high-power-using product is not small. Moreover, since this is the structure in which the two U-shaped cores 25 are stored in the hole 27a of the heat sink 27, the size of the inductor 29 has to be increased by thickness dimensions of side walls of the heat sink 27.

### [Citation List]

### [Patent Literature]

[PTL 1] Japanese Patent Application Publication No. 2005-80382

### [Summary of Invention]

### [Technical Problem]

The present invention is made in view of the abovementioned circumstances, and an objective thereof is to provide an inductor and a mounting structure thereof that achieve smaller size with lower cost, and are excellent in mounting performance.

### [Solution to Problem]

An inductor which solves the abovementioned problems includes: a U-shaped core in which legs are integrally formed on two ends of a flat plate portion including an outer surface that is a surface to be placed on a heat sink; an I-shaped core bridging the abovementioned legs of the U-shaped core; a coil wound around an outer periphery of the abovementioned I-shaped core; and an adhesive or a heat-release sheet having thermal conductivity of 0.4 W/m·K or above that is interposed between the abovementioned coil and an inner peripheral surface of the abovementioned U-shaped core.

### [Advantageous Effects of Invention]

It is possible to provide an inductor and a mounting structure thereof that achieve further small size, low cost, and an excellent mounting performance.

### [Brief Description of Drawings]

Fig. 1 is a perspective view illustrating an inductor according to one embodiment.
Fig. 2 is an exploded perspective view of the inductor illustrated in Fig. 1.
Fig. 3 is a perspective view illustrating a mounting structure of an inductor according to one embodiment.
Fig. 4 is a schematic diagram for describing an inductor according to one embodiment.
Fig. 5 is a cross-sectional view taken along II-II line of the inductor illustrated in Fig. 4.
Fig. 6A is a schematic diagram illustrating a mounting structure of an inductor different from those of the present embodiments.
Fig. 6B is a schematic diagram illustrating a mounting structure of an inductor different from those of the present embodiments.
Fig. 6C is a schematic diagram illustrating a mounting structure of an inductor different from those of the present embodiments.
Fig. 7 is a perspective view illustrating a mounting structure of an inductor different from those of the present embodiments.
Fig. 8 is a longitudinal cross-sectional view of the inductor illustrated in Fig. 7.

### [Description of Embodiments]

### Cross-Reference to Related Applications

This application claims priority under Japanese Patent Application No. 2016-123513, filed June 22, 2016, and incorporates the contents thereof.

### First Embodiment

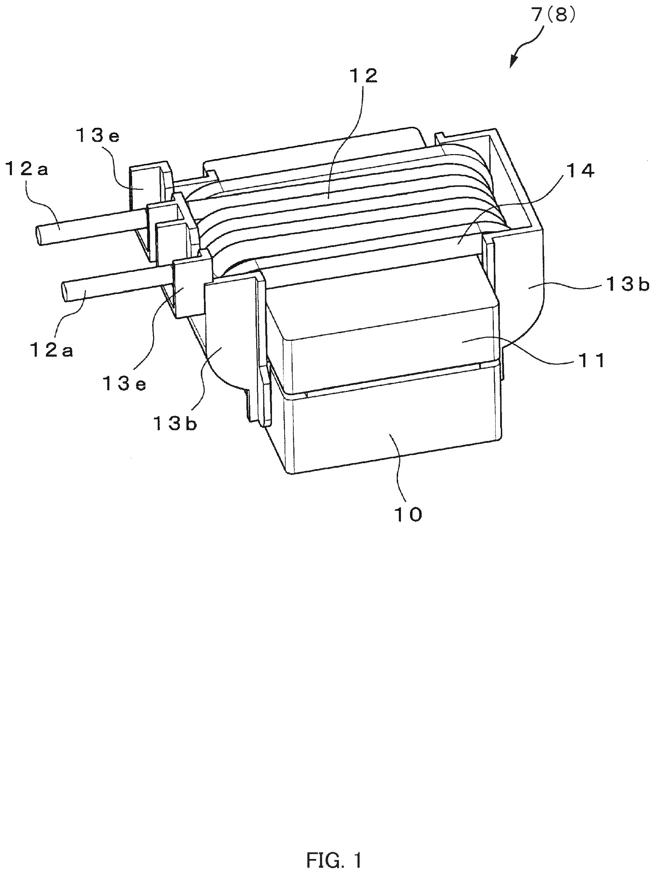

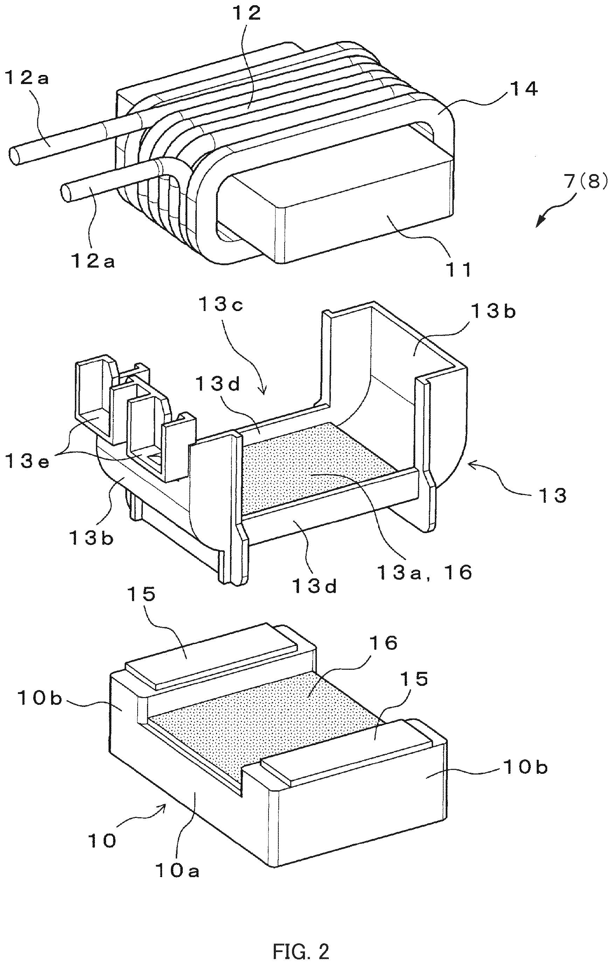

Figs. 1 and 2 illustrate one embodiment in which an inductor 7 according to a First Embodiment of the present invention is applied to a resonance coil 8. Schematically, this resonance coil 8 includes a U-shaped core 10 in which legs 10b are integrally provided to stand on two ends of a flat plate portion 10a, an I-shaped core 11 bridging the legs 10b of the U-shaped core 10 to form a closed magnetic path in a hollow square-shape with the U-shaped core 10, a coil 12 wound around an outer periphery of the I-shaped core 11, and an insulation case 13 arranged between the coil 12 and an inner peripheral surface of the U-shaped core 10.

In this case, the coil 12 is formed such that a litz wire for reducing the copper loss is wound around an outer periphery of a bobbin 14 for obtaining the electric insulation between itself and the I-shaped core 11, and the I-shaped core 11 is inserted through a center through-hole of the bobbin 14.

For example, the U-shaped core 10 and the I-shaped core 11 are made of ferrite. The I-shaped core 11 is formed in a plate shape having a rectangular section. The flat plate portion 10a of the U-shaped core 10 is formed in a plate shape having a rectangular section, which is substantially the same shape with the I-shaped core 11, and arranged such that a long side of the rectangular section forms one side of an outer surface (base surface).

A spacer (gap sheet) 15 is interposed between each of two ends of the I-shaped core 11 and an end surface of the corresponding leg 10b of the U-shaped core 10. When the thickness dimension of the abovementioned gap is great, it is preferable to use a material having high thermal conductivity and a high elastic modulus such as alumina for the abovementioned spacer 15.

The insulation case 13 is formed by integrally combining a base plate portion 13a covering a lower surface side of the coil 12 through which the I-shaped core 11 is inserted in Fig. 2 and side plate portions 13b provided to stand on two ends of the base plate portion 13a to cover side portion sides of the coil 12. An opening 13c through which the I-shaped core 11 extends is formed between the side plate portions 13b.

In addition, the base plate portion 13a of this insulation case 13 is formed with the dimensions so as to cover an upper surface of the flat plate portion 10a between the legs 10b of the U-shaped core 10, and walls 13d respectively covering side surfaces of the legs 10b are integrally formed on two side portions of the base plate portion 13a. The reference sign 13e in Fig. 2 indicates guides for pulling ends 12a of the coil 12 outward.

Adhesive (or heat-release sheet) 16 made of material having high thermal conductivity of 0.4 W/m·K or above is respectively filled between an upper surface of the base plate portion 13a of the insulation case 13 and the coil 12 and between the upper surface of the flat plate portion 10a of the U-shaped core 10 and a base surface of the insulation case 13. In this case, a silicon type adhesive and a silicone type-soft heat-release sheet are preferable for the adhesive 16 or the heat-release sheet 16.

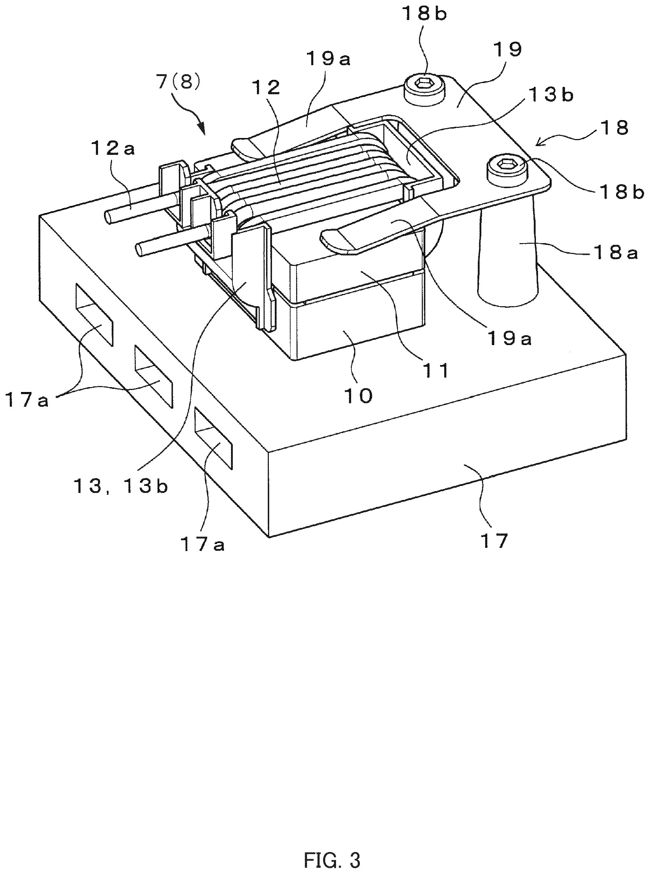

Next, one embodiment in which the mounting structure of the inductor 7 according to the First Embodiment is applied to a mounting structure of the resonance coil 8 having the abovementioned configuration is described with reference to Fig. 3.

In the mounting structure of the resonance coil 8, the outer surface (base surface) of the flat plate portion 10a of the U-shaped core 10 is placed on a top surface of a heat sink 17 and is fixed on the heat sink 17 by a fixing member 18.

The fixing member 18 includes a pair of pole members 18a provided to stand next to the resonance coil 8 and a spring member 19 in which one end is fixed to the pole members 18a by bolts 18b. Two tip end portions 19a of the spring member 19 extending over a side of an upper surface of the resonance coil 8 are arranged so as to press upper surfaces of the ends of the I-shaped core 11 projecting from the insulation case 13 toward the top surface of the heat sink 17. The reference sign 17a in Fig. 3 indicates a coolant water channel in the heat sink 17.

According to the resonance coil 8 and the mounting structure thereof having the abovementioned configuration, the I-shaped core 11 is inserted through the bobbin 14 around which the coil 12 is wound while the adhesives (or heat-release sheets) 16 made of the material having high thermal conductivity of 0.4 W/m·K or above are respectively filled between the coil 12 and the upper surface of the base plate portion 13a of the insulation case 13 and between the upper surface of the flat plate portion 10a of the U-shaped core 10 and the base surface of the insulation case 13, and the base surface of the flat plate portion 10a of the U-shaped core 10 is the surface to be placed on the heat sink 17. This increases the aspect ratio of the coil dimension and a length of the heat path of the thermal circuit for releasing the heat generated due to the iron loss and the like in the U-shaped core 10 and the I-shaped core 11 is accordingly shortened. This makes it possible to reduce the thermal resistance.

In addition, it is possible to release the heat generated in the coil 12 directly from the flat plate portion 10a of the U-shaped core 10 to the heat sink 17 through the adhesives (or heat-release sheets) 16. As a result, even if making a diameter of the wire of the coil 12 thin and the amount of the produced heat from the coil 12 is accordingly increased, it is still possible to inhibit the temperature increase of this resonance coil 8. This makes it possible to achieve further reduction of the size and weight of the resonance coil 8.

Moreover, since the shape of the section of the U-shaped core 10 is rectangular and the U-shaped core 10 is arranged such that the long side of the section forms one side of the outer surface of the flat plate portion 10a of the U-shaped core 10 (that is the surface to be placed on the heat sink 17), it is possible to increase the area of the heat path by obtaining wide areas of surfaces of the coil 12, the base plate portion 13a of the insulation case 13, and the flat plate portion 10a of the U-shaped core 10 that face each other and a wide area of the flat plate portion 10a to be placed on the heat sink 17.

Further, since the thickness dimension of the flat plate portion 10a of the U-shaped core 10 can be made to be small, it is also possible to reduce the length of the heat path. Therefore, it is possible to reliably reduce the thermal resistance and further decrease the temperature of the resonance coil 8.

In the mounting structure of the abovementioned resonance coil 8, the outer surface of the flat plate portion 10a of the U-shaped core 10 is placed on the top surface of the heat sink 17 while the two ends of the I-shaped core 11 projecting from the coil 12 are pressed toward the top surface of the heat sink 17 with tip end portions 19a of the spring member 19. This makes it possible to achieve excellent reliability against vibration and shock.

Particularly in this mounting structure, since the upper surfaces of the ends of the I-shaped core 11 projecting from the insulation case 13 are both pressed toward the top surface of the heat sink 17 by the two tip end portions 19a of the spring member 19, the points of action of the tip end portions 19a come immediately above the legs 10b of the U-shaped core 10, and additionally the pressing force from the spring member 19 acts as the compression force from the I-shaped core 11 onto the legs 10b of the U-shaped core 10.

That is, the pressing force acts as the compression stress when the legs 10b are pressed from immediately above, and none of the I-shaped core 11 and the legs 10b of the U-shaped core 10 are damaged. Thus, even when this mounting structure is used for vehicle mounting in particular, it is possible to increase the elastic modulus of the spring member 19 and improve the reliability against the vibration and shock. In addition, since the resonance coil 8 is not damaged or deformed even if the resonance coil 8 is held with stronger pressing force, it is possible to not only facilitate designing of the spring member 19 but also loosen the component tolerance, thereby decreasing the cost of the members.

Moreover, when alumina is used for the spacer (gap sheet) 15 interposed between the ends of the I-shaped core 11 and the end surfaces of the legs 10b of the U-shaped core 10, since the alumina sheet is harder than the resin sheet, the components can be held by stronger pressing force without changing the thickness dimension (compression deformation). This makes it possible to further increase the reliability against further vibration and shock.

### Second Embodiment

Next, an inductor 6a according to a Second Embodiment is described.

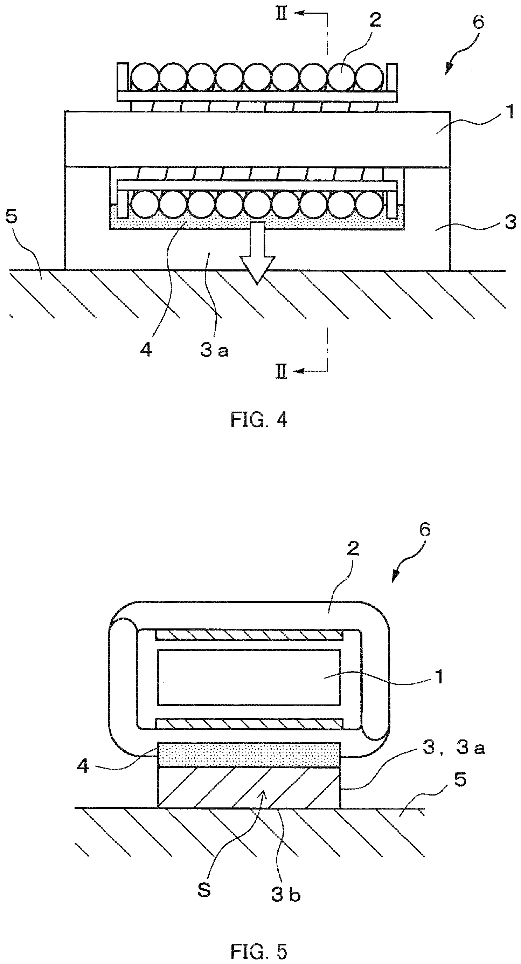

As illustrated in Figs. 4 and 5, the inductor 6a according to the Second Embodiment includes a U-shaped core 3 in which legs are integrally formed on two ends of a flat plate portion 3a including an outer surface which is a surface to be placed on a heat sink 5, an I-shaped core 1 bridging the abovementioned legs of the U-shaped core 3, and a coil 2 wound around an outer periphery of the abovementioned I-shaped core 1, in which an adhesive or heat-release sheet 4 having the thermal conductivity of 0.4 W/m-K or above is interposed between the abovementioned coil 2 and an inner peripheral surface of the abovementioned U-shaped core 3.

According to this inductor 6a, the coil 2 is arranged so as to surround the I-shaped core 1 while the adhesive (or heat-release sheet) 4 having the thermal conductivity of 0.4 W/m·K or above is interposed between the coil 2 and the inner peripheral surface of the U-shaped core 3 and the outer surface of the flat plate portion 3a of the U-shaped core 3 is the surface to be placed on the heat sink 5. Thus, even when the length of the magnetic path is the same as those of the inductors 24a, 24b, and 24c using the E-shaped cores 20 illustrated in Figs. 6A to 6C, the aspect ratio of the coil dimension is increased and the length of the heat path of the thermal circuit for releasing the heat generated due to the iron loss and the like in the U-shaped core 3 and the I-shaped core 1 is accordingly shortened. This makes it possible to reduce the thermal resistance.

In addition, it is possible to release the heat generated in the coil 2 directly from the U-shaped core 3 to the heat sink 5 through the adhesive (or heat-release sheet) 4. As a result, even if making a diameter of the wire of the coil 2 thin and the amount of the produced heat from the coil 2 is accordingly increased, it is still possible to inhibit the temperature increase of the inductor 6a. This makes it possible to achieve further reduction of the size and weight of the inductor 6a.

### Third Embodiment

Next, an inductor 6b according to a Third Embodiment is described.

Comparing with the inductor 6a according to the Second Embodiment illustrated in Figs. 4 and 5, the inductor 6b according to the Third Embodiment includes an insulation case (that corresponds to the insulation case 13 mentioned in the First Embodiment although is not illustrated in Figs. 4 and 5) arranged between the coil 2 and the inner peripheral surface of the U-shaped core 3.

That is, the inductor 6b includes the U-shaped core 3 in which the legs are integrally formed on the two ends of the flat plate portion 3a including the outer surface which is the surface to be placed on the heat sink 5, the I-shaped core 1 bridging the abovementioned legs of the U-shaped core 3, the coil 2 wound around the outer periphery of the abovementioned I-shaped core 1, and the insulation case arranged between the coil 2 and the inner peripheral surface of the abovementioned U-shaped core 3, in which the adhesives or heat-release sheets 4 having the thermal conductivity of 0.4 W/m·K or above are respectively interposed between the abovementioned coil 2 and the abovementioned insulation case and between the abovementioned insulation case and the inner peripheral surface of the abovementioned U-shaped core 3.

In the configuration in which the insulation case is arranged between the coil 2 and the inner peripheral surface of the U-shaped core 3 like this inductor 6b, it is possible to obtain the operation and effect similar to those of the inductor 6a according to the Second Embodiment by interposing the adhesives (or heat-release sheets) 4 having the thermal conductivity of 0.4 W/m·K or above between the coil 2 and the abovementioned insulation case and between the abovementioned insulation case and the inner peripheral surface of the U-shaped core 3.

### Fourth Embodiment

Next, an inductor 6c according to a Fourth Embodiment is described.

Comparing with the inductor 6a according to the Second Embodiment illustrated in Figs. 4 and 5 or the inductor 6b according to the Third Embodiment, in the inductor 6c according to the Fourth Embodiment, the abovementioned U-shaped core 3 is formed such that the abovementioned flat plate portion 3a has the rectangular section and the abovementioned U-shaped core 3 is arranged such that long sides 3b of the rectangular section are parallel to the abovementioned surface to be placed on the heat sink 5.

As illustrated in Fig. 5, in the inductor 6c, since the shape of the section S of the flat plate portion 3a of the U-shaped core 3 is rectangular and the U-shaped core 3 is arranged such that the long side 3b of the rectangular section S forms one side of the outer surface of the flat plate portion of the U-shaped core 3 (that is the surface to be placed on the heat sink 5), it is possible to increase the area of the heat path by obtaining wide areas of surfaces of the coil 2 and the U-shaped core 3 that face each other and a wide area of the abovementioned flat plate portion 3a to be placed on the heat sink 5.

Further, since the thickness dimension of the flat plate portion 3a of the U-shaped core 3 can be made small, it is also possible to reduce the length of the heat path. Therefore, it is possible to reliably reduce the thermal resistance and further decrease the temperature of the inductor 6c.

### Fifth Embodiment

Next, a Fifth Embodiment is described.

The Fifth Embodiment is a structure of mounting the abovementioned inductors 6a to 6c, in which the abovementioned outer surface of the abovementioned flat plate portion 3a of the abovementioned U-shaped core 3 is placed on the top surface of the abovementioned heat sink 5, and the two ends of the abovementioned I-shaped core 1 projecting from the abovementioned coil 2 are pressed toward the abovementioned top surface of the abovementioned heat sink 5 by the spring member (that corresponds to the spring member 19 mentioned in the First Embodiment although is not illustrated in Figs. 4 and 5).

According to the mounting structure for the inductors 6a to 6c, the outer surface of the flat plate portion 3a of the abovementioned U-shaped core 3 is placed on the top surface of the heat sink 5 while the two ends of the I-shaped core 1 projecting from the coil 2 are pressed toward the abovementioned top surface of the heat sink 5 by the spring member (corresponding to the spring member 19 mentioned in the First Embodiment). This makes it possible to obtain a further effect, which has further excellent reliability against the vibration and shock, in addition to the abovementioned operation and effect.

The abovementioned embodiments are for easy understanding of the present invention and not for limiting interpretation of the present invention. The present invention may be modified and improved without departing from the gist thereof, and the present invention includes equivalents thereof.

### [Reference Signs List]

1 I-shaped core
2 coil
3 U-shaped core
3a flat plate portion
3b long side
4 adhesive or heat-release sheet
5 heat sink
6a inductor
6b inductor
6c inductor
7 inductor
8 resonance coil
10 U-shaped core
10a flat plate portion
10b leg
11 I-shaped core
12 coil
12a end
13 insulation case
13a base plate portion
13b side plate portion
13c opening
13d wall
13e guide
14 bobbin
15 spacer (gap sheet)
16 adhesive (heat-release sheet)
17 heat sink
17a coolant water channel
18 fixing member
18a pole member
18b bolt
19 spring member
19a tip end portion
20 E-shaped core
20a middle leg
20b outer leg
21 coil
22 heat sink
23 gap sheet
24a inductor
24b inductor
24c inductor
25 U-shaped core
26 coil
27 heat sink
27a hole
28 potting material
29 inductor
G gap
S section of flat plate portion 10a

## Claims

1. An inductor, comprising:
a U-shaped core in which legs are integrally formed on two ends of a flat plate portion including an outer surface that is a surface to be placed on a heat sink;
an I-shaped core bridging the legs of the U-shaped core;
a coil wound around an outer periphery of the I-shaped core; and
an adhesive or a heat-release sheet having thermal conductivity of 0.4 W/m·K or above that is interposed between the coil and an inner peripheral surface of the U-shaped core.

2. An inductor, comprising:
a U-shaped core in which legs are integrally formed on two ends of a flat plate portion including an outer surface that is a surface to be placed on a heat sink;
an I-shaped core bridging the legs of the U-shaped core;
a coil wound around an outer periphery of the I-shaped core;
an insulation case arranged between the coil and an inner peripheral surface of the U-shaped core; and
an adhesive or a heat-release sheet having thermal conductivity of 0.4 W/m·K or above and that is interposed between the coil and the insulation case and between the insulation case and an inner peripheral surface of the U-shaped core.

3. The inductor according to claim 1 or 2, wherein
the U-shaped core is formed such that the flat plate portion has a rectangular section, and the U-shaped core is arranged such that long sides of the rectangular section are parallel to the surface to be placed on the heat sink.

4. A structure for mounting the inductor according to any one of claims 1 to 3 on a top surface of a heat sink, wherein
the outer surface of the flat plate portion of the U-shaped core is placed on the top surface of the heat sink, and
two ends of the I-shaped core projecting from the coil are pressed toward the top surface of the heat sink by a spring member.
